Europäisches Patentamt

European Patent Office

Office européen des brevets

(19)

(11) Publication number: **0 053 632**
**B1**

(12) EUROPEAN PATENT SPECIFICATION

(45) Date of publication of patent specification: **23.04.86**

(51) Int. Cl.⁴: **C 08 F 10/00, C 08 F 4/64**

(21) Application number: **80107656.3**

(22) Date of filing: **05.12.80**

(54) Catalyst composition and polymerization of alpha-olefins employing such a catalyst composition.

(43) Date of publication of application:
**16.06.82 Bulletin 82/24**

(45) Publication of the grant of the patent:
**23.04.86 Bulletin 86/17**

(84) Designated Contracting States:
**BE DE FR GB IT NL**

(56) References cited:
**GB-A- 880 747**
**GB-A- 902 845**
**GB-A-1 500 873**
**US-A-4 120 820**

(73) Proprietor: **THE DOW CHEMICAL COMPANY**
**2030 Dow Center Abbott Road P.O. Box 1967**
**Midland, MI 48640 (US)**

(72) Inventor: **Shipley, Randall Sherman**
**4830 Heathrow Lane**
**Alvin Texas (US)**
Inventor: **Birkelbach, Donald Floyd**
**Route 1 Box 120F**
**Angleton Texas (US)**
Inventor: **Lowery, Kirby, Jr.**
**536 Sycamore**
**Lake Jackson Texas (US)**

(74) Representative: **Hann, Michael, Dr.**
**Marburger Strasse 38**
**D-6300 Giessen (DE)**

Courier Press, Leamington Spa, England.

## Description

This invention relates to a new catalyst composition useful for the polymerization of α-olefins and to a polymerization process employing such a catalyst composition.

It is well known that olefins such as ethylene, propylene and 1-butene can be polymerized with certain metallic catalysts, particularly the reaction products of organometallic compounds and transition metal compounds, to form substantially unbranched polymers of relatively high molecular weight. Typically such polymerizations are carried out at relatively low temperatures and pressures in an inert liquid carrier or diluent.

Following polymerization, catalyst residues are removed from the polymer by treatment with alcohol or other deactivating agents such as aqueous base. Such catalyst deactivation procedures are expensive.

Furthermore, most known catalyst systems are more efficient in preparing polyolefins as a slurry of polymer suspended in the carrier rather than in solution at a higher temperature. The lower efficiencies of such catalysts in solution polymerization may be caused by rapid depletion or deactivation by the higher temperatures that are normally required. In addition, the copolymerization of ethylene with higher α=olefins usually has lower catalyst efficiencies than ethylene homopolymerization.

Recently, catalysts having higher efficiencies have been disclosed, as illustrated by Scata U.S. Patent 4,115,319. While the increased efficiencies achieved by using these recent catalysts are significant, even higher efficiencies are desirable, particularly in copolymerization processes. Also these high efficiency catalysts generally produce polymers of relatively narrow molecular weight distribution. It is therefore desirable to have, for some applications such as blown films and injection molding, high efficiency catalysts which produce polymers and copolymers having a broader molecular weight distribution.

The present invention, in one aspect, is a catalyst composition suitable for the polymerization of α-olefins and prepared by reaction of (A) a tetravalent titanium compound represented by the formula $TiX_n(OR)_{4-n}$ wherein X is a halogen, R is an alkyl or an aryl group having from 1 to 12 carbon atoms and n has a value of 0 to 4; (B) an anhydrous dialkyl zinc or an alkyl zinc halide, wherein each alkyl group independently has 1 to 12 carbon atoms and the halide is chloride or bromide; (C) an organomagnesium component selected from (1) an organomagnesium compound or (2) a complex of an organomagnesium compound and an organometallic compound in an amount sufficient to solubilize the organomagnesium compound in a hydrocarbon solvent, said organomagnesium compound and complex being represented respectively by the following formulas $MgR''_2$ and $MgR''_2 \cdot xMR''_y$ wherein each R'' is independently a hydrocarbyl group having from 1 to 20 carbon atoms; M is a metal selected from Al, Zn, Si, Sn, B and P; y is the number of hydrocarbyl groups and corresponds to the valency of M, and x is 0.001 to 10; and (D) a halide source selected from (1) an active non-metallic halide, said non-metallic halide corresponding to the formula R'X wherein R' is hydrogen or a hydrocarbyl group such that the hydrocarbyl halide is at least as active as sec-butyl chloride and does not poison the catalyst and X is halogen, or (2) a metallic halide corresponding to the formula $MR_{y-a}X_a$ wherein M is a metal of group IIB, IIIA or IVA of Mendeleev's Periodic Table of Elements, R is a monovalent hydrocarbyl radical, X is halogen, y is a number corresponding to the valence of M and a is a number of 1 to y; provided that the proportions of the foregoing components of said catalytic reaction product being such that the atomic ratio of Mg:Ti is 1:1 to 2000:1, the atomic ratio of Al:Ti is 0.1:1 to 2000:1, the atomic ratio of Zn:Ti is 0.01 to 500:1, the atomic ratio of excess X:Al is 0.0005:1 to 10:1; and further provided that when the organomagnesium component and/or the halide source provides insufficient quantities of aluminum, there is also present (E) an aluminum compound represented by the formula $AlR_{y'}X_{y''}$ wherein R and X are as defined above and y' and y'' each have a value of from zero to three with the sum of y' and y'' being three, the components being added in the order (C), (D), (B), (E) if required and (A).

In a second aspect, the invention is a process for polymerizing α-olefin under conditions characteristic of Ziegler polymerization wherein the above catalyst is employed as the catalyst.

Such a process is capable of producing more than a million pounds of olefin polymer or copolymer per pound of transition metal. The resulting olefin polymers generally contain lower amounts of catalyst residues than polymers produced with conventional catalyst even after treating to remove residual catalyst. Further, these polymers have a relatively broader molecular weight distribution.

The present invention is most advantageously practiced in a polymerization process wherein an α-olefin is polymerized, generally in the presence of hydrogen as a molecular weight control agent, in a polymerization zone containing an inert diluent and the catalyst. It is most beneficially carried out under inert atmosphere and relatively low temperature and pressure, although very high pressures are optionally employed.

Olefins which are suitably homopolymerized or copolymerized in the practice of this invention are aliphatic α-monoolefins or α-diolefins having from 2 to 18 carbon atoms. Illustratively, such α=olefins can include ethylene, propylene, butene-1, pentene-1, 3-methylbutene-1, 4-methylpentene-1, hexene-1, octene-1, dodecene-1, octadecene-1, and 1,7-octadiene. Also the α-olefins may be copolymerized with other α-olefins and/or with small amounts, e.g. up to about 25 weight percent based on the polymer, of other ethylenically unsaturated monomers such as styrene, α-methylstyrene and similar ethylenically unsaturated monomers suitable with Ziegler catalysts. Most benefits are realized in the polymerization of aliphatic α=monoolefins, particularly ethylene and mixtures of ethylene and up to 50, especially from 0.1 to 40, weight percent of propylene, butene-1, hexene-1, octene-1, 4-methylpentene-1, 1,7-octadiene or similar α-olefin or diolefin based on total monomer.

The stated anhydrous zinc compounds are required to obtain a broader molecular weight distribution. Particularly suitable zinc compounds include, diethyl zinc, ethyl zinc chloride, and mixtures thereof.

The tetravalent titanium compound has the empirical formula: $TiX_n(OR)_{4-n}$ wherein X is a halogen, particularly chlorine or bromine, R is an alkyl or an aryl group having from 1 to 12 carbon atoms and n has a value of 0 to 4. Such titanium compounds are preferably derived from the titanium halides wherein one or more of the halogen atoms are replaced by an alkoxy or aryloxy group. Exemplary compounds include tetra-n-butoxy titanium, di-n-butoxy titanium dichloride, monoethoxy titanium trichloride, and tetraphenoxytitanium.

The preferred organomagnesium component is a hydrocarbon soluble complex of the formula $MgR''_2 \cdot xMR''_y$ wherein R'' is independently a hydrocarbyl group having from 1 to 20 carbon atoms, M is aluminum, zinc or mixtures thereof and x is about 0.001 to 10, especially from about 0.15 to about 2.5 and y denotes the number of hydrocarbyl groups which corresponds to the valence of M. As used herein, hydrocarbyl are monovalent hydrocarbon radicals. Preferably, hydrocarbyl is alkyl, cycloalkyl, aryl, aralkyl, alkenyl and similar hydrocarbon radicals having 1 to 20 carbon atoms, with alkyl having 1 to 10 carbon atoms being especially preferred.

This complex is prepared by reacting particulate magnesium such as magnesium turnings or magnesium granules, magnesium powder and the like with about a stoichiometric amount of hydrocarbyl· halide, illustrated as R'X. The resulting hydrocarbon insoluble $MgR''_2$ is solubilized by adding the organometallic compound such as $AlR''_3$ or mixtures thereof with $ZnR''_2$. The amount of organometallic compounds which is added to the $MgR''_2$ to form the organomagnesium complex should be enough to solubilize at least about 5 weight percent of $MgR''_2$, preferably at least about 50 weight percent and especially preferred all the $MgR''_2$. When employing a mixture of $AlR''_3$ and $ZnR''_2$ to solubilize $MgR''_2$ the atomic ratio of Zn to Al is from 3000 to 1 to 0.1 to 1, preferably from 350 to 1 to 1 to 1.

To obtain maximum catalyst efficiency at polymerization temperatures above 180°C, it is desirable to minimize the amount of aluminum in the complex and total catalyst. Accordingly, for catalysts having Al to Ti atomic ratios less than 120 to 1, it is desirable to have Mg to Al atomic ratios more than 0.3 to 1, preferably from 0.5 to 1 to 10 to 1.

Organometallic compounds other than $AlR''_3$, $ZnR''_2$ or mixtures thereof which also solubilize the organomagnesium compound in hydrocarbon are employed in beneficial amounts, usually an amount sufficient to produce an atomic ratio of 0.01:1 to 10:1 of metal of the organometallic compounds to magnesium. Examples of such organometallic compounds include boron trialkyls such as boron triethyl, alkyl silanes such as dimethyl silane and tetraethyl silane, alkyl tin and alkyl phosphorous compounds.

Alternatively, organomagnesium compounds can be used as the organomagnesium component particularly when rendered soluble in hydrocarbon by addition of ether, amine, etc. More recently such compounds have been made hydrocarbon soluble as taught in Kamienski U.S. 3,646,231. These organomagnesium compounds are most desirable if an organomagnesium compound is to be used as the organomagnesium component.

The organomagnesium compound is a hydrocarbon soluble dihydrocarbylmagnesium such as the magnesium dialkyls and the magnesium diaryls. Exemplary magnesium dialkyls include n-butylsec-butyl magnesium, diisopropyl magnesium, di-n-hexyl magnesium, isopropyl-n-butyl magnesium, ethyl-n-hexyl magnesium, ethyl-n-butyl magnesium, di-n-octyl magnesium and others wherein the alkyl has from 1 to about 20 carbon atoms. Exemplary magnesium diaryls include diphenylmagnesium, dibenzylmagnesium, and particularly ditolylmagnesium.

The halide sources are the active non-metallic halides of the formula R'X including hydrogen halides and active organic halides such as t-alkyl halides, allyl halides, benzyl halides and other active hydrocarbyl halides. By an active organic halide is meant a hydrocarbyl halide that contains a labile halogen at least as active, i.e., as easily lost to another compound, as the halogen of sec-butyl chloride and preferably as active as t-butyl chloride. Examples of preferred active non-metallic halides include hydrogen chloride, hydrogen bromide, t-butyl chloride, t-amyl bromide, allyl chloride, benzyl chloride, crotyl chloride, methylvinyl carbinyl chloride, α-phenylethyl bromide, and diphenyl methyl chloride. Most preferred are hydrogen chloride, t-butyl chloride, allyl chloride and benzyl chloride.

Suitable metallic halides as set forth by formula hereinbefore are organometallic halides and metal halides wherein the metal is in Group IIB, IIIA or IVA of Mendeleev's Periodic Table of Elements. Preferred metallic halides are aluminum halides of the formula $AlR_{3-a}X_a$ wherein each R is independently hydrocarbyl such as alkyl, X is a halogen, and a is a number from 1 to 3. Most preferred are alkylaluminum halides such as ethylaluminum sesquichloride, diethylaluminum chloride, ethylaluminum dichloride, and diethylaluminum bromide, with ethylaluminum dichloride being especially preferred. Alternatively, a metal halide such as aluminum trichloride or a combination of aluminum trichloride with an alkyl aluminum halide or a trialkyl aluminum compound may be employed.

In cases wherein neither the organomagnesium component nor the halide source contains aluminum, it is necessary to include in the total catalyst an aluminum compound such as an alkyl aluminum compound, e.g., a trialkyl aluminum, an alkyl aluminum halide or an aluminum halide.

The catalyst is prepared by mixing the components of the catalyst in an inert liquid diluent in the following order: organomagnesium compound, halide source, zinc compound, aluminum compound if required, and titanium compound.

The atomic ratios of Al:Ti are from 0.1:1 to 2000:1, preferably from 1:1 to 200:1. However, when polymerization temperatures above 180°C are employed, the aluminum compound is used in proportions such that the Mg:Al ratio is more than 0.3:1, preferably from 0.5:1 to 10:1, and Al:Ti ratio is less than 120:1, preferably less than 50:1. The use of very low amounts of aluminum necessitates the use of high purity solvents or diluents in the polymerization zone and, other components should be essentially free of impurities which react with aluminum alkyls. Otherwise, additional quantities of an organometallic compound must be used to react with such impurities. Moreover, in the catalyst the aluminum compound should be in the form of trialkyl aluminum or alkyl aluminum halide substantially free of alkyl aluminum dihalide.

The catalyst components are preferably combined carried out in the presence of an inert diluent such that the resultant slurry is from 0.005 to 1.0 molar (moles/liter) with respect to magnesium. Suitable inert organic diluents include liquified ethane, propane, isobutane, n-butane, n-hexane, the various isomeric hexanes, isooctane, paraffinic mixtures of alkanes having from 8 to 12 carbon atoms, cyclohexane, methylcyclopentane, dimethylcyclohexane, dodecane, and industrial solvents composed of saturated or aromatic hydrocarbons such as kerosene, naphthas, etc., especially when freed of any olefin compounds and other impurities, and having boiling points in the range from −50° to 200°C. Also included as suitable inert diluents are benzene, toluene, ethylbenzene, cumene, and decalin.

Mixing of the components to provide the desired catalyst is advantageously carried out under an inert atmosphere such as nitrogen, or argon at temperatures in the range from −100 to 200°C, preferably from about 0° to 100°C. The period of mixing is not critical as an active catalyst composition usually forms in 1 minute or less. In the preparation of the catalytic reaction product, it is not necessary to separate hydrocarbon soluble and insoluble components.

Polymerization is effected by adding a catalytic amount of the above catalyst composition to a polymerization zone containing α-olefin monomer, or vice versa at temperatures in the range from 0 to 300°C, and preferably at solution polymerization temperatures, e.g., from 130° to 250°C for a residence time of about a few seconds to several days, preferably 15 seconds to 2 hours.

It is generally desirable to use sufficient catalyst to provide from 0.0001 to 0.1 millimoles titanium per liter of diluent. However, that the most advantageous catalyst concentration will depend upon polymerization conditions such as temperature, pressure, solvent and presence of catalyst poisons. The foregoing range normally gives maximum catalyst yields in terms of weight of polymer per unit weight of titanium.

Generally an inert organic diluent or solvent or excess monomer is employed as a carrier. To realize the full benefit of the high efficiency catalyst, care must be taken to avoid oversaturation of the solvent with polymer. For best results, it is preferred that the amount of polymer in the carrier not exceed about 50 weight percent based on the total weight of the reaction mixture.

To optimize catalyst yields in the polymerization of ethylene, it is preferable to maintain an ethylene concentration in the solvent in the range of from 1 to 10 weight percent, most advantageously from 1.2 to 2 weight percent. To achieve this, when an excess of ethylene is fed into the system, a portion of the ethylene can be vented.

Hydrogen can be employed to control the molecular weight of the resultant polymer in concentrations ranging from 0.001 to 1 mole per mole of monomer. The larger amounts of hydrogen produce generally lower molecular weight polymers. Hydrogen can be added to the reactor with a monomer stream or separately before, during, or after addition of the monomer.

The polymerization pressures preferably are relatively low, e.g., from 50 to 1000 psig (3.5—70 bar gauge), especially from 100 to 700 psig (7.0—42 bar gauge). However, polymerization can occur at pressures from atmospheric up to the pressure limit of the equipment. During polymerization, stirring is desirable to obtain better temperature control and maintain uniform polymerization conditions.

The monomer or mixture of monomers is contacted with the catalyst in any conventional manner, preferably by bringing the catalyst and monomer together with intimate agitation provided by stirring or other means. Agitation can be continued during polymerization, but in some instances, the polymerization in an unstirred zone is desirable. Adequate means should be provided for dissipating the exothermic heat of polymerization including reflexing monomer and diluent. The polymerization can be effected in batch or continuous manner, such as, by passing the reaction mixture through an elongated reaction tube which is contacted externally with suitable cooling medium to maintain the desired reaction temperature, or by passing the reaction mixture through an equilibrium overflow reactor or a series of the same.

The polymer is recovered from the polymerization mixture by removing any unreacted monomer and solvent. No further purification is required. In some instances, however, it may be desirable to add a small amount of conventional catalyst deactivating reagent. The resultant polymer contains insignificant amounts of catalyst residue and possesses a relatively broad molecular weight distribution.

The following examples are given to illustrate the invention. All percentages are by weight and all parts are by molar or atomic ratio unless otherwise indicated. The melt index values $I_2$ and $I_{10}$ were determined by the method of ASTM D 1238-70 and the density values were determined by ASTM D 1248-74.

Examples 1—8 and Comparative experiments A and B

A. Preparation of anhydrous $MgCl_2$

To 39.68 ml (0.025 moles) of 0.63 M di-n-hexyl magnesium was added 460.32 ml of 2,2,4-trimethylpentane (isooctane). Anhydrous electronic grade HCl was passed through the solution until a light yellow color persisted. Excess HCl was stripped from the mixture by passing dry $N_2$ through the solution.

B. Preparation of the catalyst composition

The catalyst composition was prepared by adding with stirring under a nitrogen atmosphere to a 118.28 cc serum bottle the following components in the following order:

| | |
|---|---|
| (87.40−x−y) ml | of 2,2,4-trimethylpentane |
| 12.0 ml | of 0.05 M $MgCl_2$ as prepared above |
| x ml | of 0.85 M diethyl zinc (DEZ) |
| y ml | of 1.00 M triethyl aluminum (ATE) |
| 0.60 ml | of 0.025 M tetra-isopropyl titanate (Ti(OiPr)$_4$) |
| 100.0 ml | |

The temperature of the serum bottles was maintained at ambient temperature (about 22°C). Depending on the ratio of the concentration of DEZ to ATE, the catalyst was observed to darken over a period of about 10 minutes. After this time, there was no significant change in catalyst color.

The quantities of DEZ and ATE and the atomic ratios of the catalyst components are given in Table I.

TABLE I

| Example and Comparative experiment number | x ml | y ml | Mg:Ti | Atomic ratio | | |
|---|---|---|---|---|---|---|
| | | | | Zn:Ti | Al:Ti | *XsCl:Al |
| 1 | 1.32 | 0.15 | 40:1 | 75:1 | 10:1 | 0.01:1 |
| 2 | 1.32 | 0.30 | 40:1 | 75:1 | 20:1 | 0.005:1 |
| 3 | 0.88 | 0.75 | 40:1 | 50:1 | 50:1 | 0.002:1 |
| 4 | 0.88 | 0.30 | 40:1 | 50:1 | 20:1 | 0.005:1 |
| 5 | 0.88 | 0.375 | 40:1 | 50:1 | 25:1 | 0.004:1 |
| A | 0 | 0.75 | 40:1 | 0:1 | 50:1 | 0.002:1 |
| 6 | 0.88 | 0.30 | 40:1 | 50:1 | 20:1 | 0.005:1 |
| 7 | 0.88 | 0.30 | 40:1 | 50:1 | 20:1 | 0.005:1 |
| 8 | 1.32 | 0.15 | 40:1 | 75:1 | 10:1 | 0.01:1 |
| B | 0 | 0.75 | 40:1 | 0:1 | 50:1 | 0.002:1 |

* XsCl=excess chloride

C. Polymerization (Ex. 1—5 and Comparative experiment A)

A stirred batch reactor containing 2 liters of 2,2,4-trimethylpentane (isooctane) was heated to 150°C. The solvent vapor pressure was 276 kPa (2.8 kg/cm$^2$). To this was added 70 kPa (0.70 kg/cm$^2$) of hydrogen and 896 kPa (9.1 kg/cm$^2$) of ethylene for a total reactor pressure of 1241 kPa (12.7 kg/cm$^2$). An amount of the above catalyst was injected into the reactor (10 ml=0.0015 m Moles Ti), and the reactor pressure was maintained constant at 1241 kPa (12.7 kg/cm$^2$) with ethylene. The total reaction time was 30 minutes. The quantities of catalyst and polymerization results are given in Table II.

D. Polymerization (Ex. 6—8 and Comparative experiment A)

The catalyst preparation was identical to that given above. In these examples, the polymerization was conducted at 80°C (slurry conditions). The solvent vapor pressure was 99 kPa and 552 kPa (5.6 kg/cm$^2$) of hydrogen was added. To this was added 827 kPa (8.4 kg/cm$^2$) of ethylene for a total reactor pressure of 1379 kPa (14.0 kg/cm$^2$). All other parameters are the same. The results of these examples are given in Table II.

When comparing two samples of polymer, it is necessary for the melt indices ($I_2$) of the samples to be similar since the $I_{10}/I_2$ ratio is inversely proportional to the melt index. The value of the $I_{10}/I_2$ ratio is a

5

**0 053 632**

reflection of the molecular weight distribution of the polymer since a broad molecular weight distribution is indicated by a large $I_{10}/I_2$ ratio while a small ratio indicates a relatively narrow distribution.

A broad distribution is desirable in film resins because the broadened distribution leads to higher polymer melt strengths which in turn lead to improved film fabrication conditions. In addition, a broad molecular weight distribution is desirable in injection molding resins due to improved rheological (i.e., processing) properties.

In Table II, comparative experiment A can be compared with Example 1 and 8 on the basis of similar melt indices. It can be seen that from 2.5 to 4.5 $I_{10}/I_2$ units of broadening results using the improved catalyst of this invention. Comparative experiment B can be compared with Examples 6 and 7. The amount of broadening observed is 2.4 and 3.5 $I_{10}/I_2$ units, respectively. The resins produced using this novel catalyst system thus show more desirable properties for film and injection molding applications than the resins made by the catalysts in the comparative experiments.

TABLE II

| Example and Comparative experiment number | Quantity of catalyst ml | Polymer yield grams | Catalyst efficiency g polymer/g $Ti \times 10^6$ |
|---|---|---|---|
| 1 | 15 | 129 | 1.20 |
| 2 | 10 | 91 | 1.27 |
| 3 | 10 | 131 | 1.82 |
| 4 | 25 | 123 | 0.68 |
| 5 | 10 | 108 | 1.50 |
| A | 10 | 164 | 2.28 |
| 6 | 25 | 122 | 0.68 |
| 7 | 25 | 91 | 0.51 |
| 8 | 25 | 96 | 0.42 |
| B | 30 | 132 | 0.61 |

6

TABLE II (continued)

| Example and Comparative experiment number | Melt index | | | Peak MW[1] | $M_w/M_n$[2] | Density g/cc |
|---|---|---|---|---|---|---|
| | $I_2$ | $I_{10}$ | $I_{10}/I_2$ | | | |
| 1 | 0.46 | 6.77 | 14.72 | 42,500 | 4.29 | 0.9613 |
| 2 | 0.91 | 9.76 | 10.73 | N.D.[3] | N.D. | 0.9608 |
| 3 | 1.21 | 13.70 | 11.32 | N.D. | N.D. | 0.9640 |
| 4 | 1.18 | 11.80 | 10.00 | 32,000 | 7.09 | 0.9622 |
| 5 | 1.29 | 15.53 | 12.04 | N.D. | N.D. | 0.9637 |
| A | 0.47 | 5.75 | 12.23 | N.D. | N.D. | 0.9605 |
| 6 | 0.29 | 4.36 | 15.03 | 33,500 | 5.72 | 0.9603 |
| 7 | 0.32 | 5.18 | 16.19 | 30,900 | 10.54 | 0.9609 |
| 8 | 0.42 | 7.00 | 16.67 | 34,000 | 9.02 | 0.9614 |
| B | 0.35 | 4.42 | 12.63 | N.D. | N.D. | 0.9589 |

[1] Peak molecular weight=the most frequently occurring molecular weight of all polymer species present as weight average molecular weight determined by gel permeation chromatography.

[2] $M_w/M_n$=weight average molecular weight divided by the number average molecular weight as determined by gel permeation chromatography.

[3] N.D.=not determined.

Examples 9—15 and Comparative experiment C

A. Catalyst preparation

The catalyst composition was prepared by adding with stirring under a nitrogen atmosphere to a 118.28 cc serum bottle the following components in the following order:

| | |
|---|---|
| (97.53−x−y) ml | of 2,2,4-trimethylpentane |
| 0.97 ml | of 0.63 M n-butyl ethyl magnesium (BEM) |
| 0.90 ml | of 0.50 M tin (IV) chloride ($SnCl_4$) |
| x ml | of 0.85 M diethyl zinc (DEZ) |
| y ml | of 1.00 M triethyl aluminum (ATE) |
| 0.60 ml | of 0.025 M tetraisopropyl titanate ($Ti(OiPr)_4$) |
| 100.00 ml | |

For best results order of addition in this case is extremely important since it is necessary to convert the BEM to $MgCl_2$ with the $SnCl_4$ before adding the other components. When $SnCl_4$ is employed as the halide source, it is necessary to add a small amount, at least 1 atom of Al per atom of Ti, of an aluminum compound before adding the titanium source in order to form an active catalyst.

The quantities of DEZ and ATE and the atomic ratios of the catalyst components are given in Table III.

**0 053 632**

TABLE III

| Example and Comparative experiment number | x ml | y ml | Mg:Ti | Atomic ratio | | |
|---|---|---|---|---|---|---|
| | | | | Zn:Ti | Al:Ti | *XsCl:Al |
| 9 | 0.88 | 0.75 | 40:1 | 50:1 | 50:1 | 0.8:1 |
| 10 | 0.44 | 0.75 | 40:1 | 25:1 | 50:1 | 0.8:1 |
| 11 | 0.18 | 0.75 | 40:1 | 10:1 | 50:1 | 0.8:1 |
| 12 | 1.32 | 0.30 | 40:1 | 75:1 | 20:1 | 2:1 |
| 13 | 1.32 | 0.75 | 40:1 | 75:1 | 50:1 | 0.8:1 |
| 14 | 0.88 | 0.30 | 40:1 | 50:1 | 20:1 | 2:1 |
| 15 | 0.88 | 0.49 | 40:1 | 50:1 | 27:1 | 1.5:1 |
| C | 0 | 0.75 | 40:1 | 0:1 | 50:1 | 0.8:1 |

* XsCl=excess chloride

B. Polymerization

Each of the catalysts were employed to polymerize ethylene employing the conditions for Examples 1—5. The results are given in Table IV.

In Table IV, comparative experiment C can most closely be compared with Example 10. Again there is about 1.2 $I_{10}/I_2$ units of broadening at this higher melt index value. Thus, the resin from Example 10 shows more desirable film and injection molding properties than the resin in Comparative experiment C.

TABLE IV

| Example and Comparative experiment number | Quantity of catalyst ml | Polymer yield grams | Catalyst efficiency g polymer/g Ti$\times 10^6$ |
|---|---|---|---|
| 9 | 15 | 148 | 1.37 |
| 10 | 10 | 156 | 2.17 |
| 11 | 6.7 | 141 | 2.94 |
| 12 | 40 | 92 | 0.32 |
| 13 | 6.7 | 83 | 1.73 |
| 14 | 6.5 | 66 | 0.14 |
| 15 | 35 | 111 | 0.44 |
| C | 15 | 180 | 1.67 |

8

## 0 053 632

### TABLE IV (continued)

| Example and Comparative experiment number | Melt index | | | Peak MW[1] | $M_w/M_n$[2] | Density g/cc |
|---|---|---|---|---|---|---|
| | $I_2$ | $I_{10}$ | $I_{10}/I_2$ | | | |
| 9 | 1.16 | 12.15 | 10.47 | 34,800 | 4.5 | 0.9638 |
| 10 | 1.84 | 18.73 | 10.18 | 31,900 | 3.12 | 0.9641 |
| 11 | 1.29 | 12.10 | 9.38 | N.D.[3] | N.D. | 0.9633 |
| 12 | 1.57 | 17.69 | 11.27 | 25,900 | 6.22 | 0.9662 |
| 13 | 1.09 | 11.50 | 10.55 | 35,200 | 4.59 | 0.9639 |
| 14 | 1.82 | 20.71 | 11.38 | 22,600 | 6.35 | 0.9671 |
| 15 | 0.98 | 10.37 | 10.58 | 31,100 | 6.43 | 0.9640 |
| C | 2.94 | 25.88 | 8.80 | N.D. | N.D. | 0.9644 |

[1] Peak molecular weight=the most frequently occurring molecular weight of all polymer species present as weight average molecular weight determined by gel permeation chromatography.

[2] $M_w/M_n$=weight average molecular weight divided by the number average molecular weight as determined by gel permeation chromatography.

[3] N.D.=not determined.

The catalyst composition was also employed in a continuous operation. The following Examples are given to illustrate possible uses of the invention in a continuous process.

### Claims

1. A catalyst composition suitable for the polymerization of α-olefins and prepared by reaction of:

(A) a tetravalent titanium compound represented by the formula $TiX_n(OR)_{4-n}$ wherein X is a halogen, R is an alkyl or an aryl group having from 1 to 12 carbon atoms and n has a value of 0 to 4;

(B) an anhydrous dialkyl zinc or an alkyl zinc halide, wherein each alkyl group independently has 1 to 12 carbon atoms and the halide is chloride or bromide;

(C) an organomagnesium component selected from (1) an organomagnesium compound or (2) a complex of an organomagnesium compound and an organometallic compound in an amount sufficient to solubilize the organomagnesium compound in a hydrocarbon solvent, said organomagnesium compound and complex being represented respectively by the following formulas $MgR''_2$ and $MgR''_2 \cdot xMR''_y$ wherein each R'' is independently a hydrocarbyl group having from 1 to 20 carbon atoms; M is a metal selected from Al, Zn, Si, Sn, B and P; y is the number of hydrocarbyl groups and corresponds to the valency of M, and x is 0.001 to 10; and

(D) a halide source selected from (1) an active non-metallic halide, said non-metallic halide corresponding to the formula R'X wherein R' is hydrogen or a hydrocarbyl group such that the hydrocarbyl halide is at least as active as sec-butyl chloride and does not poison the catalyst and X is halogen, or (2) a metallic halide corresponding to the formula $MR_{y-a}X_a$ wherein M is a metal of Group IIB, IIIA or IVA of Mendeleev's Periodic Table of Elements, R is a monovalent hydrocarbyl radical, X is halogen, y is a number corresponding to the valence of M and a is a number of 1 to y; provided that the proportions of the foregoing components of said catalytic reaction product being such that the atomic ratio of Mg:Ti is 1:1 to 2000:1, the atomic ratio of Al:Ti is 0.1:1 to 2000:1, the atomic ratio of Zn:Ti is 0.01 to 500:1, the atomic ratio of excess X:Al is 0.0005:1 to 10:1; and further provided that when the organomagnesium component and/or the halide source provides insufficient quantities of aluminum, there is also present (E) an aluminum compound represented by the formula $AlR_{y'}X_{y''}$ wherein R and X are as defined above and y' and y'' each have a value of from zero to three with the sum of y' and y'' being three, the components being added in the order (C), (D), (B), (E) if required and (A).

2. The catalyst composition of Claim 1 wherein the anhydrous divalent zinc compound is an alkyl zinc halide, and the atomic ratio of Mg:Ti is 2:1 to 200:1, the atomic ratio of Al:Ti is 0.5:1 to 200:1, the atomic ratio of Zn:Ti is 0.5:1 to 100:1 and the atomic ratio of excess X:Al is 0.002:1 to 2:1.

3. The catalyst composition of Claim 2 where the atomic ratio of Mg:Ti is from 5:1 to 75:1, the atomic ratio of Al:Ti is from 1:1 to 75:1, the atomic ratio of Zn:Ti is from 0.5:1 to 75:1 and the atomic ratio of excess X:Al is from 0.01:1 to 1.4:1.

9

0 053 632

4. The catalyst composition of Claims 1—3 where the organomagnesium compound is a dihydrocarbyl magnesium.

5. The catalyst composition of Claims 1—4 where the tetravalent titanium compound is tetraisopropoxy titanium.

6. The catalyst composition of Claims 1 to 5 where the anhydrous divalent zinc compound is diethyl zinc.

7. A process for the polymerization of an $\alpha$-olefin under conditions characteristic of Ziegler polymerization which comprises employing as the polymerization catalyst the composition of any one of Claims 1 to 6.

8. The process of Claim 7 where the dialkyl zinc compound is diethyl zinc.

9. The process of Claims 7 or 8 where the $\alpha$-olefin is ethylene or a mixture of ethylene and at least one other copolymerizable ethylenically unsaturated monomer.

**Patentansprüche**

1. Katalysatorzusammensetzung, die für die Polymerisation von $\alpha$-Olefinen geeignet ist, hergestellt durch Umsetzung von:

(A) einer vierwertigen Titanverbindung der Formel $TiX_n(OR)_{4-n}$ in der X Halogen ist, R eine Alkyl- oder Arylgruppe mit 1 bis 12 Kohlenstoffatomen ist und n einen Wert von 0 bis 4 hat,

(B) einer wasserfreien Dialkylzink- oder Alkylzinkhalogenverbindung, in der jede der Alkylgruppen unabhängig 1 bis 12 Kohlenstoffatome aufweist und das Halogen Chlor oder Brom ist,

(C) einer Organomagnesiumverbindung, ausgewählt aus (1) einer Organomagnesiumverbindung oder (2) einem Komplex einer Organomagnesiumverbindung und einer organometallischen Verbindung in einer Menge die ausreicht, die Organomagnesiumverbindung in einem Kohlenwasserstofflösungsmittel löslich zu machen, wobei die Organomagnesiumverbindung bzw. der Komplex den folgenden Formeln entspricht: $MgR''_2$ und $MgR''_2 \times MR''_y$, in denen R'' unabhängig eine Hydrocarbylgruppe mit 1 bis 20 Kohlenstoffatomen ist, M ein Metall aus der Gruppe Al, Zn, Si, Sn, B und P ist, y ist die Zahl der Hydrocarbylgruppen, die mit der Wertigkeit von M übereinstimmt und X ist 0,001 bis 10 und

(D) einer Halogenquelle, ausgewählt aus (1) einem nicht-metallischen Halogenid, das der Formel R'X entspringt, in der R' Wasserstoff oder eine Hydrocarbylgruppe ist, so daß die Hydrocarbylhalogenverbindung mindestens so aktiv ist wie sek.-Butylchlorid und den Katalysator nicht vergiftet und X Halogen ist oder (2) einem Metallhalogenid, das der Formel $MR_{y-a}X_a$ entspricht, in der M ein Metall der Gruppe IIB, IIIA oder IVA des Mendeljewschen periodischen Systems der Elemente ist, R ein einwertiges Hydrocarbylradical ist, X Halogen ist, y ist eine mit der Wertigkeit von M übereinstimmende Zahl und a eine Zahl von 1 bis y ist, wobei die Verhältnisse der zuvor angegebenen Verbindungen des katalytischen Reaktionsproduktes so beschaffen sind, daß das Atomverhältnis Mg:Ti 1:1 bis 2000:1 ist, das Atomverhältnis Al:Ti 0,1:1 bis 2000:1 ist, das Atomverhältnis von Zn:Ti 0,01 bis 500:1 ist, das Atomverhältnis von Überschuß X:Al 0,0005:1 bis 10:1 ist und außerdem dann, wenn die Organomagnesiumverbindung und/oder die Halogenquelle unzureichende Mengen an Aluminium ergeben, noch eine Aluminiumverbindung der Formel $AlR_yX_{y'}$ anwesend ist, in der R und X die bereits angegebene Bedeutung haben und y' und y'' jeweils Werte von 0 bis 3 haben und die Summe von y' und y'' 3 ist, und die Komponenten in der Reihenfolge (C), (D), (B), falls erforderlich (E) und (A) zugesetzt werden.

2. Katalysatorzusammensetzung nach Anspruch 1, dadurch gekennzeichnet, daß die wasserfreie zweiwertige Zinkververbindung ein Alkylzinkhalogenid ist und das Atomverhältnis von Mg:Ti 2:1 bis 200:1 ist, das Atomverhältnis von Al:Ti 0,5:1 bis 200:1 ist, das Atomverhältnis von Zn:Ti 0,5:1 bis 100:1 ist und das Atomverhältnis von Überschuß X:Al 0,002:1 bis 2:1 ist.

3. Katalysatorzusammensetzung nach Anspruch 2, dadurch gekennzeichnet, daß das Atomverhältnis von Mg:Ti von 5:1 bis 75:1 ist, das Atomverhältnis von Al:Ti von 1:1 bis 75:1 ist, das Atomverhältnis von Zn:Ti von 0,5:1 bis 75:1 ist und das Atomverhältnis von Überschuß X:Al von 0.01:1 bis 1.4:1 ist.

4. Katalysatorzusammensetzung nach Ansprüchen 1 bis 3, dadurch gekennzeichnet, daß die Organomagnesiumverbindung eine Dihydrocarbylmagnesiumverbindung ist.

5. Katalysatorzusammensetzung nach Ansprüchen 1 bis 4, dadurch gekennzeichnet, daß die vierwertige Titaniumverbindung Tetraisopropoxititan ist.

6. Katalysatorzusammensetzung nach Ansprüchen 1 bis 5, dadurch gekennzeichnet, daß die wasserfreie zweiwertige Zinkverbindung Diethylzink ist.

7. Verfahren zur Polymerisation von $\alpha$-Olefinen unter Bedingungen der Ziegler Polymerisation, dadurch gekennzeichnet, daß als Polymerisationskatalysator die Zusammensetzung nach jedem der Ansprüche 1 bis 6 verwendet wird.

8. Verfahren nach Anspruch 7, dadurch gekennzeichnet, daß die Dialkylzinkverbindung Diethylzink ist.

9. Verfahren nach Ansprüchen 7 oder 8, dadurch gekennzeichnet, daß das $\alpha$-Olefin Ethylen oder eine Mischung von Ethylen und mindestens einem anderen copolymerisierbaren ethylenisch ungesättigten Monomer ist.

**Revendications**

1. Composition de catalyseur convenant à la polymérisation d'$\alpha$-oléfines et préparée par la réaction

10

(A) d'un composé du titane tétravalent, représenté par la formule $TiX_n(OR)_{4-n}$ dans laquelle X est un halogène, R est un groupe alkyle ou aryle ayant de 1 à 12 atomes de carbone, et n a une valeur de 0 à 4;

(B) d'un halogénure anhydre de dialkyl-zinc ou d'alkyl-zinc, où chaque groupe alkyle, indépendamment des autres, possède 1 à 12 atomes de carbone, et l'halogénure est le chlorure ou le bromure;

(C) d'un constituant organomagnésien choisi entre (1) un composé organomagnésien ou (2) un complexe d'un composé organomagnésien et d'un composé organométallique en une quantité suffisante pour solubiliser le composé organomagnésien dans le solvant hydrocarboné, lesdits composé organomagnésien et complexe étant représentés respectivement par les formules suivantes $MgR''_2$ et $MgR''_2 \cdot xMR''_y$, dans lesquelles chaque radical R'' est, indépendamment des autres, un groupe hydrocarboné ayant de 1 à 20 atomes de carbone; M est un métal choisi entre Al, Zn, Si, Sn, B et P; y est le nombre de groupes hydrocarbonés et correspond à la valence de M, et x vaut de 0,001 à 10; et

(D) d'une source d'halogénure choisie entre (1) un halogénure non-métallique actif, ledit halogénure nonmétallique correspondant à la formule R'X dans laquelle R' est l'hydrogène ou un groupe hydrocarboné tel que l'halogénure d'hydrocarbone soit au moins aussi actif que le chlorure de sec-butyle et n'empoisonne pas le catalyseur, et X est un halogène, ou (2) un halogénure métallique correspondant à la formule $MR_{y-a}X_a$, dans laquelle M est un métal du Groupe IIB, IIIA ou IVA du Tableau Périodique des Eléments de Mendeleev, R est un radical hydrocarboné monovalent, X est un halogène, y est un nombre correspondant à la valence de M et a est un nombre de 1 à y; à la condition que les proportions des constituants ci-dessus dudit produit de réaction catalytique soient telles que le rapport atomique Mg:Ti soit de 1:1 à 2000:1, que le rapport atomique Al:Ti soit de 0,1:1 à 2000:1, que le rapport atomique Zn:Ti soit de 0,01 à 500:1, que le rapport atomique (X en excès):Al soit de 0,0005:1 à 10:1; et, de plus, à la condition que, quand le constituant organomagnésien et/ou la source d'halogénure fournit des quantités insuffisantes d'aluminium, il y ait aussi présent (E) un composé de l'aluminium représenté par la formule $AlR_{y'}X_{y''}$ dans laquelle R et X sont comme ils ont été définis ci-dessus et y' et y'' ont chacun une valeur de zéro à trois, la somme de y' et y'' étant égale à trois, les constituants étant ajoutés dans l'ordre (C), (D), (B), (E) si nécessaire et (A).

2. Composition de catalyseur selon la revendication 1, dans laquelle le composé anhydre du zinc divalent est un halogénure d'alkyl-zinc, et le rapport atomique Mg:Ti est de 2:1 à 200:1, le rapport atomique Al:Ti est de 0,5:1 à 200:1, le rapport atomique Zn:Ti est de 0,5:1 à 100:1 et le rapport atomique (X en excès):Al est de 0,002:1 à 2:1.

3. Composition de catalyseur selon la revendication 2, dans laquelle le rapport atomique Mg:Ti est de 5:1 à 75:1, le rapport atomique Al:Ti est de 1:1 à 75:1, le rapport atomique Zn:Ti est de 0,5:1 à 75:1 et le rapport atomique (X en excès):Al est de 0,01:1 à 1,4:1.

4. Composition de catalyseur selon les revendications 1 à 3, dans laquelle le composé organomagnésien est un composé dihydrocarboré du magnésium.

5. Composition de catalyseur selon les revendications 1 à 4, dans laquelle le composé du titane tétravalent est le tétraisopropoxy titane.

6. Composition de catalyseur selon les revendications 1 à 5, dans laquelle le composé anhydre du zinc divalent est le diéthyl-zinc.

7. Procédé pour la polymérisation d'une α-oléfine dans des conditions caractéristiques d'une polymérisation de Ziegler, qui comporte l'emploi, en tant que catalyseur de polymérisation, de la composition conforme à l'une quelconque des revendications 1 à 6.

8. Procédé selon la revendication 7, dans lequel le composé dialkyl-zinc est le diéthyl-zinc.

9. Procédé selon les revendications 7 ou 8, dans lequel l'α-oléfine est l'éthylène ou un mélange d'éthylène et d'au moins un autre monomère copolymérisable, à insaturation éthylénique.